# EUROPEAN PATENT SPECIFICATION

(11) **EP 3 541 918 B1**
(45) Date of publication and mention of the grant of the patent: **19.07.2023**
(21) Application number: 17872806.9
(22) Date of filing: 15.11.2017
(51) Int. Cl.: C12C 7/00, C12C 7/04, C12C 7/06

(54) **APPARATUS AND METHOD FOR MASHING OF MALT AND WATER TO PRODUCE WORT IN A TANK**
VORRICHTUNG UND VERFAHREN ZUM STAMPFEN VON MALZ UND WASSER ZUR HERSTELLUNG VON WÜRZE IN EINEM TANK
APPAREIL ET PROCÉDÉ DE BRASSAGE DE MALT ET D'EAU POUR PRODUIRE DU MOÛT DANS UNE CUVE

(30) Priority: 21.11.2016 NO 20161836
(43) Date of publication of application: 25.09.2019
(73) Proprietor: Monmic Operations AS, 5954 Mongstad (NO)
(72) Inventor: MICHELSEN, Erik, 5244 Fana (NO); MONSEN, Stein Kyrre, 5957 Myking (NO); VASSNES, Trond, 5394 Kolbeinsvik (NO)
(74) Representative: Acapo AS
(86) International application number: PCT/NO2017/050294
(87) International publication number: WO 2018/093271

(56) References cited:
- DE-A1- 2 903 666
- DE-A1-102008 039 373
- GB-A- 810 146
- GB-A- 810 146
- GB-A- 962 572
- GB-A- 1 000 221
- US-A- 3 834 296

## Description

### Field of the invention

The present invention relates to an apparatus and method for mashing of malt and water to produce wort in a tank.

### Disclosure of the state of art

Today's methods for mashing wort for producing beer can be divided in 3:
- Infusion method
- RIMS method - Recirculating Infusion Mash System
- HERMS method - Heat Exchange Recirculating Mash System

All methods are based on infusion which by temperature breaks down complex sugar to sugar that can be fermented by yeast.

The infusion method is a batch method where you fill in warm water and malt in a container which ends up at the desired mashing temperature. The mash temperature should ideally be kept stable for approximately 60 minutes. The mash temperature will determine the characteristics of the beer and the resulting alcohol level.

The RIMS mashing method is also a batch method where the wort is circulated normally out from the bottom of the mashing vessel through a circulation pump and back to the top of the mashing vessel. The wort is directly heated normally inside the mashing vessel.

The HERMS mashing method is also a batch method where the wort is circulated normally out from the bottom of the mashing vessel through a circulation pump and back to the top of the mashing vessel. This method transfer heat to the wort through a heat exchanger, normally heated by hot water in a separate vessel.

All known mashing methods targeting to extract sugar from the grain/malt in such a way that the quality of the beer is as good as possible. In addition, it is important to extract as much sugar as possible out from the available grain/malt. The efficiency of extracting the sugar from grain/malt is defined as Mash efficiency and finally Brewhouse efficiency.

GB 810146 A discloses a method and apparatus in where malt grist and hot water are fed continuously into the head of a tube or tower for passage downwardly at a temperature adequate for enzymatic conversion and the solid residue is separated from the wort produced at the bottom of the tube or tower. Ground malt mixed with hot water by a stirrer is fed down a conversion tower heated through coils; spent grains are conveyed away up a branch tube for passage up a washing tube against a counter-current stream of hot water for removal of further soluble extractives. The wort and wash liquor are separated through rotating disc filters, respectively. The wash liquor may be mixed for use with the wort, or the wash liquor or wort may be returned to the head of the tower.

The main object of GB 810146 A is to secure greater convenience of operation in the preparation of worts by continuous flow, this being attained by feeding a mixture of hot water and malted grain, with or without starchy adjuncts, continuously into the head of a tube or tower provided with facilities for maintaining its contents at any desired temperature or temperatures below the boiling-point of water, for example at several temperatures in superposed zones of progressively increasing temperatures down the tube or tower, so that the goods (i.e. the solids added into the head of the tube) will be partially converted by means of the enzymes in the malt into soluble extractives, thus providing a rich wort. The tube or tower, stirrer, and heating coils, are essential for performing the mash process according to the stated objects.

DE 102008039373 A1 discloses a similar mash refining device comprises a refining unit with a conveyor to which a sieve-tube is arranged, an inlet for mash, a device for collecting and supplying of flavour, and/or an outlet for spent grains. The refining unit comprises an inlet for hot water, where the inlet brings the water through sieve-tube to conveyor for washing the spent grains. The conveyor is a pressing screw. The device for collecting and supplying of flavour is formed as a tube that is arranged to the sieve-tube. The refining device is constructed in such a way that the refining process is carried out partially under protective gas atmosphere. The refining units are arranged in series, where the spent grains are supplied from a first refining unit to the next refining unit. The mash is supplied to the first refining unit and the inlet for liquid for washing the spent grains is arranged in a following refining unit. The refining unit is arranged under an angle of 5-30°C to horizontal.

GB 1000221 A discloses an apparatus and method in where brewers' wort is continuously hopped and boiled by flowing a stream of wort along a substantially horizontal path, adding hops at a first position in said path, positively carrying the hops in the wort, at a desired speed, to a second position in said path, and heating the wort between the said positions. The hops may be carried in a direction opposite to the direction of flow of wort and may be removed from the wort adjacent the second position. The wort may be maintained below its boiling temperature adjacent the point where hops are removed, so that proteins are coagulated and precipitated and removed with the hops. Alternatively, the hops may be carried in the same direction as the flow of wort. Hops may also be added to the wort in at least one other position between the said first and second positions. The wort may flow through a vented, tubular casing, along which the hops are conveyed by a rotating helical conveyer passing axially through the casing. The edges of the helical flights of the conveyer are close to the side wall of the casing and may be provided with resilient wipers, e.g. of durable plastic material, for cleaning the said side wall. The helical flights of the conveyer are foraminous or perforated when they convey the hops in a direction opposite to the flow of wort. The casing is heated by gas burners or steam jackets.

GB 962572 A discloses an apparatus and method in continuously hopping wort, hops are conveyed, on the perforated platforms of an end-less travelling conveyer, through and against a stream of boiling wort flowing through the U-shaped lower portion of a casing, which may be heated by steam, at a temperature between 215 and 230 DEG F, in a jacket. Fresh hops are fed on to the platforms through an opening in the inverted-U-shaped upper portion of the casing and spent hops together with precipitated trub are removed through an opening, as by steam from an injector. Sweet wort, from a pipe, is fed into the casing through an opening. The wort may be injected, in the form of a spray as by blowing steam, from a jet, across the outlet of the pipe. Hopped wort leaves the casing through an opening and a vented pipe and then flows over a weir into a discharge pipe. The height of the weir may be varied to attain a desired height of wort in the lower portion of the casing. The conveyer may carry scrapers, to prevent deposition of trub on the inner surface of the casing. Steam for assisting the liberation of humulone and essential oils from the hops may be fed into the casing through a pipe and water or wet steam may be fed in, through a pipe, to sparge the used hops.

US 3834296 A discloses an apparatus for continuously making beer wort from dried malt, and which has a malt soaking unit and a malt crusher which is adapted to receive the soaked malt from the unit and has at least two smooth-surface cooperating rolls and drive means for driving them at differential velocities. A conduit system has a plurality of upright heatable conduit sections and serves for heating a mash which is produced after the malt has been treated in the crusher, and a clarifying unit is provided for clarifying the mash having been heated previously.

### Objects of the present invention

The new method and mash apparatus of in-line brewing differ itself from the known methods by being a continuous mashing method opposite to the known methods which are batch methods. The in-line brewing invention may result in a mashing process:
- Requiring less labour per litre wort.
- No washing of equipment as for batch equipment.
- Enabling unmanned 24/7 operation.
- Closed waste disposal logistics
- Possible higher thermal efficiency
- High Mash Efficiency

It is thus an object of the present invention to provide an alternative and improved apparatus and method for continuous mashing process, in where there is no need for cleaning of the mashing tank. The invention will also give the flexibility to change to a new beer type in short time, and can be more energy efficient.

### Summary of the invention

The invention provides a method and apparatus using a single tank for mixing of water and fresh malt, separation of sugar (enzymatic conversion), and separation of wort and solids.

According to a first aspect of the invention, a method for mashing of malt and water to produce wort in a single upright tank is provided, comprising the steps: feeding of fresh malt via a fresh malt inlet to a lower part of the tank; feeding of mash water via a mash water inlet to an upper part of the tank; mixing of the fresh malt and the mash water in the tank to produce the wort by conveying malt from a lower part of the tank to an upper part of the tank; discharge of used malt through an upper used malt outlet; and discharge of wort from the tank through a lower wort outlet.

Malt can be continuously conveyed from the lower part of the tank to the upper part of the tank by a screw conveyer. Alternatively, malt can be semi-continuously conveyed from the lower part of the tank to the upper part of the tank, in that malt for a complete mash batch is feed into the tank, and conveyed up in the tank by a screw conveyer.

The mash water can be preheated prior to being fed to the mash water inlet.

The mash water is pumped in through the mash water inlet in an upper part of the tank, and the mash water can be regulated to a temperature that together with the malt ends up at desired mashing temperature in the tank.

The time to convey the malt from the lower part of the tank to the upper part of the tank can be set to normal mashing time. Mashing time can be set to approximately 60 minutes.

Mash water can be circulated from a lower part of the tank to an upper part of the tank in a sparging loop comprising a circulation pump.

Further, mash water can be heated, or heat is maintained in the sparging loop by a heat exchanger.

According to a second aspect of the invention, a mash apparatus for production of wort is provided, comprising a single upright tank for holding malt and water, said tank having a lower part with a lower fresh malt inlet and a lower wort outlet, an upper part with an upper used malt outlet and an upper mash water inlet, wherein said tank further comprises an internal conveyer for feeding of malt from the lower part to the upper part.

Said conveyer can be a screw conveyer. Further, the tank can be an upright circular-cylindrical cylinder, and the conveyer a vertical screw conveyer located inside the tank.

The lower part of the tank may comprise a screw conveyer for feeding of fresh malt from the fresh malt inlet to the interior of the tank. A malt hopper can be located above the screw conveyer in the fresh malt inlet.

The upper part of the tank can also comprise a screw conveyer for feeding of used malt from the interior of the tank to the used malt outlet.

The tank may further comprise a circulation pump for creation of a sparging loop, circulation pump for creation of a sparging loop, to circulated mash water that has run down, from the lower part of the tank to the upper part of the tank.

A heat exchanger to heat or maintain heat in the mash water during the mashing process can be included in the sparging loop.

### Description of the figures

Embodiments of the present invention will now be described, by way of example only, with reference to the following figures, wherein:
Figure 1 shows a first embodiment of a mash apparatus according to the invention.
Figure 2 shows a second embodiment of a mash apparatus according to the invention.

### Description of preferred embodiments of the invention

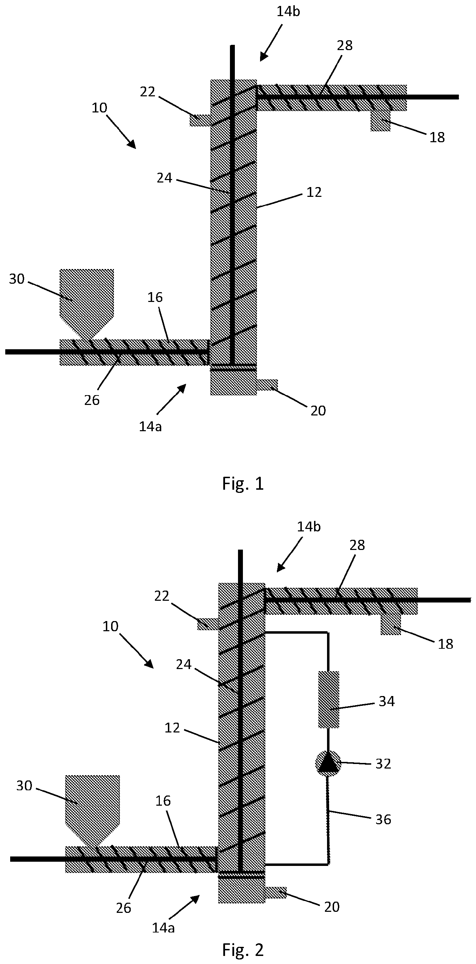

Figure 1 shows a mash apparatus 10 with a single upright tank 12 in the form of a cylinder with a lower part 14a and an upper part 14b. The lower part 14a of the tank 12 comprises a lower fresh malt inlet 16 and a lower wort outlet 20. The lower fresh malt inlet 16 may further comprise a horizontal screw conveyer 26 for conveying fresh malt from a malt hopper 30 to the lower part 14a of the tank 12. The upper part 14b of the tank 12 may comprise an upper mash water inlet 22 and an upper used malt outlet 18. The upper part 14b of the tank 12 may further comprise a horizontal screw conveyer 28 for conveying used malt to the upper used malt outlet 18.

The upright tank 12 further comprises an internally and vertically placed conveyer, preferable a screw conveyer 24, for transport of malt, and water, vertically in the tank 12.

Figure 2 shows a second embodiment of the mash apparatus 10 according to the invention. The mash apparatus 10 is similar to the first embodiment shown in figure 1, but may include a sparging loop 36. The sparging loop can include a pump 32 for pumping mash water from the lower part 14a of the tank 12 to the upper part 14b of the tank 12. The sparging loop 36 may further include a heat exchanger 34 heating or maintaining heat in the mash water in the loop.

Each screw conveyer 24,26,28 are preferable driven by an adjoining drive motor (not shown), and connected to a control system. The mash water inlet 22 can also be connected to the same control system. The same applies to the wort outlet 20 and used malt outlet 18. All parts of the apparatus 10 may be connected to said control system, thus providing an automatic mashing process.

The method according to the invention may include two mashing processes.

A first idea of the present invention is to have a continuous mashing process instead of batch process. This is done by feeding the malt into the lower part 14a of the cylindrical tank 12 where the transport screw 24 is located inside. The time to move the malt, by the screw 24, from the bottom 14a of the tank to the top outlet 18 in the upper part 14b of the tank 12, is equal to the mashing time (normally 60 minutes). In the upper part 14b of the tank 12 the mash water will be pumped in through the malt water inlet 22 at a temperature that together with the malt ends up at the mashing temperature in the tank 12. The mash water can be preheated or not, and the temperature can be regulated in the tank 12. The outside of the tank 12 can be heat traced if required. When the fresh malt, injected in the bottom 14a of the tank 12, meets the mashing water it will lose its sugar content to the water. In the bottom the malt will have the maximum sugar content and, in the top, near the exit, it will have the minimum sugar content. The water will have its minimum sugar content in the top of the tank 12 and its maximum sugar content in the bottom of the tank 12, near the exit. The volumetric flow and the malt vs the volumetric flow of the mash water will give the efficiency of the brewery. If required, the apparatus 10 can be equipped with the sparging loop 36 where mash water that has run down can be circulated from the bottom of the tank 12 to the top of the tank. If required, this loop can pass the heat exchanger 34 to heat or maintain heat during the mashing process. The finished wort will be taken out in the bottom of the tank 12 through the wort outlet 20 and the used malt discharged in the top of the tank 12 through the used malt outlet 18.

A second idea of the present invention is to have a semi-continuous mashing process instead of a batch process. This is done by feeding the malt into the bottom part 14a of the tank 12 where the transport screw 24 is located inside. The malt for a complete mash batch will then be screwed up to a level in the tank 12. In the top of the tank 12 the mash water will be pumped in through the mash water inlet 22 at a temperature that together with the malt ends up at the mashing temperature in the tank 12. The mash water can be preheated or not, and the temperature can be regulated in the tank 12. The outside of the tank 12 can be heat traced if required. If required, the apparatus 10 can be equipped with the sparging loop 36 where mash water that has run down can be circulated from the bottom 14a of the tank 12 to the top 14b of the tank 12. If required, this loop 36 can pass the heat exchanger 34 to heat or maintain heat during the mashing process. When the mash batch is completed the wort is drained out in the bottom 14a of the apparatus 10, through the wort outlet 20, and the used malt discharged at the top 14b through the used malt outlet 18.

Other means than screw conveyers may be used for conveying the malt in the tank, for instance rotary valves, or other feeding methods.

## Claims

1. Method for mashing of malt and water to produce wort in a single upright tank (12), comprising the steps:
- feeding of fresh malt via a fresh malt inlet (16) to a lower part of the tank (12),
- feeding of mash water via a mash water inlet (22) to an upper part of the tank (12),
- mixing of the fresh malt and the mash water in the tank (12) to produce the wort by conveying malt from the lower part of the tank (12) to the upper part of the tank (12),
- discharge of used malt through an upper used malt outlet (18), and
- discharge of wort from the tank (12) through a lower wort outlet (20).

2. Method according to claim 1, wherein malt is continuously conveyed from the lower part of the tank (12) to the upper part of the tank (12) by a screw conveyer (24).

3. Method according to claim 1, wherein malt is semi-continuously conveyed from the lower part of the tank (12) to the upper part of the tank (12), in that malt for a complete mash batch is feed into the tank, and conveyed up in the tank (12) by a screw conveyer (24).

4. Method according to claim 1, wherein the mash water is preheated prior to being fed to the mash water inlet (22).

5. Method according to claim 1, wherein the mash water is pumped in through the mash water inlet (22) in an upper part of the tank (12), and the mash water is regulated to a temperature that together with the malt ends up at desired mashing temperature in the tank (12).

6. Method according to claim 1, wherein the time to convey the malt from the lower part of the tank (12) to the upper part of the tank (12) is set to normal mashing time, such as approximately 60 minutes.

7. Method according to claim 1, wherein mash water is circulated from a lower part (14a) of the tank (12) to an upper part (14b) of the tank (12) in a sparging loop (36) comprising a circulation pump (32).

8. Method according to claim 7, wherein mash water is heated or heat is maintained in the sparging loop (36) by a heat exchanger (34).

9. Mash apparatus (10) for production of wort, comprising a single upright tank (12) for holding malt and water, said tank (12) having a lower part (14a) with a lower fresh malt inlet (16) and a lower wort outlet (20), an upper part (14b) with an upper used malt outlet (18) and an upper mash water inlet (22), wherein said tank (12) further comprises an internal conveyer (24) for feeding of fresh malt from the lower part (14a) to the upper part (14b).

10. Mash apparatus according to claim 9, wherein said conveyer (24) is a screw conveyer.

11. Mash apparatus according to claim 10, wherein said tank (12) is an upright circular-cylindrical cylinder, and the conveyer (24) is a vertical screw conveyer located inside the tank (12).

12. Mash apparatus according to claim 9, wherein the lower part (14a) of the tank (12) comprises a screw conveyer (26) for feeding of fresh malt from the fresh malt inlet (16) to the interior of the tank (12).

13. Mash apparatus according to claim 12, wherein a malt hopper (30) is located above the screw conveyer (26) in the fresh malt inlet (16).

14. Mash apparatus according to claim 9, wherein the upper part (14b) of the tank (12) comprises a screw conveyer (28) for feeding of used malt from the interior of the tank (12) to the used malt outlet (18).

15. Mash apparatus according to claim 9, wherein the tank (12) comprises a circulation pump (32) for creation of a sparging loop (36), to circulated mash water that has run down, from the lower part (14a) of the tank (12) to the upper part (14b) of the tank (12).

16. Mash apparatus according to claim 15, wherein a heat exchanger (34) to heat or maintain heat in the mash water during the mashing process is included in the sparging loop (36).

## Patentansprüche

1. Verfahren zum Maischen von Malz und Wasser zum Herstellen von Würze in einem einzelnen aufrechtstehenden Tank (12), das folgende Schritte umfasst:
- Zuführen von frischem Malz über einen Frischmalzeinlass (16) in einen unteren Teil des Tanks (12),
- Zuführen von Maischwasser über einen Maischwassereinlass (22) in einen oberen Teil des Tanks (12),
- Vermischen des frischen Malzes und des Maischwassers im Tank (12) zum Herstellen der Würze durch Fördern von Malz vom unteren Teil des Tanks (12) zum oberen Teil des Tanks (12),
- Ablassen von verbrauchtem Malz durch einen oberen Auslass für verbrauchtes Malz (18), und
- Ablassen von Würze aus dem Tank (12) durch einen unteren Würzeauslass (20).

2. Verfahren nach Anspruch 1, wobei Malz durch einen Schneckenförderer (24) kontinuierlich vom unteren Teil des Tanks (12) zum oberen Teil des Tanks (12) befördert wird.

3. Verfahren nach Anspruch 1, wobei Malz halbkontinuierlich vom unteren Teil des Tanks (12) zum oberen Teil des Tanks (12) gefördert wird, indem Malz für eine komplette Maischecharge in den Tank zugeführt und im Tank (12) durch einen Schneckenförderer (24) nach oben gefördert wird.

4. Verfahren nach Anspruch 1, wobei das Maischwasser vorgewärmt wird, bevor es dem Maischwassereinlass (22) zugeführt wird.

5. Verfahren nach Anspruch 1, wobei das Maischwasser durch den Maischwassereinlass (22) in einem oberen Teil des Tanks (12) hineingepumpt wird, und das Maischwasser auf eine Temperatur geregelt wird, die zusammen mit dem Malz die gewünschte Maischetemperatur im Tank (12) erreicht.

6. Verfahren nach Anspruch 1, wobei die Zeit, um das Malz vom unteren Teil des Tanks (12) zum oberen Teil des Tanks (12) zu befördern, auf eine normale Maischzeit, wie ungefähr 60 Minuten, eingestellt wird.

7. Verfahren nach Anspruch 1, wobei Maischwasser von einem unteren Teil (14a) des Tanks (12) zu einem oberen Teil (14b) des Tanks (12) in einer Durchspülschleife (36) umfassend eine Umwälzpumpe (32) zirkuliert wird.

8. Verfahren nach Anspruch 7, wobei Maischwasser durch einen Wärmetauscher (34) erhitzt oder Wärme in der Durchspülschleife (36) gehalten wird.

9. Vorrichtung zum Maischen (10) zur Herstellung von Würze, die einen einzelnen aufrechten Tank (12) zum Aufnehmen von Malz und Wasser umfasst, wobei der Tank (12) einen unteren Teil (14a) mit einem unteren Einlass für frisches Malz (16) und einem unteren Würzauslass (20), einen oberen Teil (14b) mit einem oberen Auslass (18) für verbrauchtes Malz und einem oberen Maischwassereinlass (22) aufweist, wobei der Tank (12) ferner einen internen Förderer (24) zum Zuführen von frischem Malz vom unteren Teil (14a) zum oberen Teil (14b) umfasst.

10. Vorrichtung zum Maischen nach Anspruch 9, wobei der Förderer (24) ein Schneckenförderer ist.

11. Vorrichtung zum Maischen nach Anspruch 10, wobei der Tank (12) ein aufrechter kreiszylindrischer Zylinder ist, und der Förderer (24) ein vertikaler Schneckenförderer ist, der sich innerhalb des Tanks (12) befindet.

12. Vorrichtung zum Maischen nach Anspruch 9, wobei der untere Teil (14a) des Tanks (12) einen Schneckenförderer (26) zum Zuführen von frischem Malz vom Frischmalzeinlass (16) in das Innere des Tanks (12) umfasst.

13. Vorrichtung zum Maischen nach Anspruch 12, wobei sich ein Malztrichter (30) oberhalb des Schneckenförderers (26) im Frischmalzeinlass (16) befindet.

14. Vorrichtung zum Maischen nach Anspruch 9, wobei der obere Teil (14b) des Tanks (12) einen Schneckenförderer (28) zum Zuführen von verbrauchtem Malz aus dem Inneren des Tanks (12) zum Auslass für verbrauchtes Malz (18) umfasst.

15. Vorrichtung zum Maischen nach Anspruch 9, wobei der Tank (12) eine Umwälzpumpe (32) zur Erzeugung einer Durchspülschleife (36) zu umgewälztem heruntergelaufenem Maischwasser vom unteren Teil (14a) des Tanks (12) zum oberen Teil (14b) des Tanks (12) umfasst.

16. Vorrichtung zum Maischen nach Anspruch 15, wobei ein Wärmetauscher (34) zum Erhitzen oder Halten von Wärme im Maischwasser während des Maischeprozesses in der Durchspülschleife (36) eingeschlossen ist.

## Revendications

1. Procédé d'empâtage de malt et d'eau pour produire du moût dans une cuve verticale unique (12), comprenant les étapes suivantes :
- l'introduction de malt frais par une entrée de malt frais (16) vers une partie inférieure de la cuve (12),
- l'introduction d'eau d'empâtage par une entrée d'eau d'empâtage (22) vers une partie supérieure de la cuve (12),
- le mélange du malt frais et de l'eau d'empâtage dans la cuve (12) pour produire le moût en acheminant du malt depuis la partie inférieure de la cuve (12) vers la partie supérieure de la cuve (12),
- l'évacuation du malt épuisé à travers une sortie supérieure de malt épuisé (18), et
- l'évacuation du moût depuis la cuve (12) à travers une sortie inférieure de moût (20).

2. Procédé selon la revendication 1, dans lequel le malt est acheminé en continu depuis la partie inférieure de la cuve (12) vers la partie supérieure de la cuve (12) par un transporteur à vis (24).

3. Procédé selon la revendication 1, dans lequel du malt est transporté de façon semi-continue depuis la partie inférieure de la cuve (12) vers la partie supérieure de la cuve (12), de manière à ce que du malt pour une fournée complète d'empâtagesoit introduit dans la cuve, et transporté jusqu'au haut de la cuve (12) par un transporteur à vis (24).

4. Procédé selon la revendication 1, dans lequel l'eau d'empâtage est préchauffée avant d'être introduite dans l'entrée d'eau d'empâtage (22).

5. Procédé selon la revendication 1, dans lequel l'eau d'empâtage est pompée à travers l'entrée d'eau d'empâtage (22) jusque dans une partie supérieure de la cuve (12), et l'eau d'empâtage est régulée à une température qui, ensemble avec le malt, se retrouve à une température d'empâtage souhaitée dans la cuve (12).

6. Procédé selon la revendication 1, dans lequel le temps pour transporter le malt depuis la partie inférieure de la cuve (12) jusqu'à la partie supérieure de la cuve (12) est réglé à un temps d'empâtage normal, tel qu'environ 60 minutes.

7. Procédé selon la revendication 1, dans lequel l'eau d'empâtage est mise en circulation depuis une partie inférieure (14a) de la cuve (12) jusqu'à une partie supérieure (14b) de la cuve (12) dans un circuit de barbotage (36) comprenant une pompe de circulation (32).

8. Procédé selon la revendication 7, dans lequel l'eau d'empâtage est chauffée ou de la chaleur est maintenue dans le circuit de barbotage (36) par un échangeur de chaleur (34).

9. Appareil d'empâtage (10) pour la production de moût, comprenant une cuve verticale unique (12) destinée à contenir du malt et de l'eau, ladite cuve (12) présentant une partie inférieure (14a) comprenant une entrée inférieure de malt frais (16) et une sortie inférieure de moût (20), une partie supérieure (14b) avec une sortie supérieure de malt épuisé (18) et une entrée supérieure d'eau d'empâtage (22), dans lequel ladite cuve (12) comprend en outre un transporteur intérieur (24) pour introduire du malt frais depuis la partie inférieure (14a) vers la partie supérieure (14b).

10. Appareil d'empâtage selon la revendication 9, dans lequel ledit transporteur (24) est un transporteur à vis.

11. Appareil d'empâtage selon la revendication 10, dans lequel ladite cuve (12) est un cylindre vertical cylindrique circulaire, et le transporteur (24) est un transporteur à vis vertical situé à l'intérieur de la cuve (12).

12. Appareil d'empâtage selon la revendication 9, dans lequel la partie inférieure (14a) de la cuve (12) comprend un transporteur à vis (26) pour introduire du malt frais depuis l"entrée de malt frais (16) vers l'intérieur de la cuve (12).

13. Appareil d'empâtage selon la revendication 12, dans lequel une trémie à malt (30) est située au-dessus du transporteur à vis (26) dans l"entrée de malt frais (16).

14. Appareil d'empâtage selon la revendication 9, dans lequel la partie supérieure (14b) de la cuve (12) comprend un transporteur à vis (28) pour introduire du malt épuisé depuis l'intérieur de la cuve (12) vers la sortie de malt épuisé (18).

15. Appareil d'empâtage selon la revendication 9, dans lequel la cuve (12) comprend une pompe de circulation (32) pour créer un circuit de barbotage (36) vers de l'eau d'empâtage distribuée qui s'est déchargée, depuis la partie inférieure (14a) de la cuve (12) vers la partie supérieure (14b) de la cuve (12).

16. Appareil d'empâtage selon la revendication 15, dans lequel un échangeur de chaleur (34) pour chauffer ou maintenir la chaleur dans l'eau d'empâtage durant le processus d'empâtage est inclus dans le circuit de barbotage (36).
